# FASCICULE DE BREVET EUROPEEN

(11) **EP 0 542 600 B1**
(45) Date de publication et mention de la délivrance du brevet: **21.08.1996**
(21) Numéro de dépôt: 92402972.1
(22) Date de dépôt: 03.11.1992
(51) Int. Cl.: B60P 1/48

(54) **Système d'accrochage pour dispositif de manutention de bennes trapézoidales**
Anhakungsvorrichtung für Förderungsvorrichtung von trapezförmigen Behältern
Hooking system for handling device of trapezoidal containers

(30) Priorité: 15.11.1991 FR 9114106
(43) Date de publication de la demande: 19.05.1993
(73) Titulaire: MARREL, F-42160 Andrézieux-Bouthéon (FR)
(72) Inventeur: Chalavon, Jacques, F-42340 Veauche (FR); Chiron, Alain, F-42610 Saint Romain Le Puy (FR)
(74) Mandataire: Rinuy, Santarelli

(56) Documents cités:
- EP-A- 0 107 892
- EP-A- 0 404 620
- DE-A- 3 426 310
- DE-A- 3 544 843
- PATENT ABSTRACTS OF JAPAN vol. 012, no. 419 (M-760) 8 Novembre 1988 & JP-A-63 154 442 (KYOKUTO KAIHATSU KOGYO) 27 Juin 1988

## Description

L'invention a trait à la manutention des bennes de forme trapézoïdale qui sont munies en partie haute, sur chaque face latérale, de deux pattes en saillie pour accrocher le bout d'une chaîne, et en partie basse sur chaque face transversale, de un ou deux axe(s) de basculement orienté(s) horizontalement et parallèlement à la face transversale.

On sait que ces bennes sont destinées à être manipulées par un dispositif, généralement monté sur un véhicule, qui comporte de chaque côté un bras articulé à sa base autour d'un axe horizontal tandis qu'à son sommet sont fixées à un point commun deux chaînes de même longueur dont l'extrémité libre de chacune est destinée à être accrochée sur l'une des pattes en saillie sur la partie haute de la face latérale correspondante de la benne. Pour charger ou décharger la benne, on fait pivoter simultanément les deux bras, les chaînes se tendent, la benne est soulevée et décrit un arc de cercle - centré sur l'axe commun de pivotement des bras - en restant horizontale, l'ensemble benne-chaînes pivotant sous l'effet de la gravité autour de l'axe passant par les deux points communs d'accrochage des chaînes. Pour permettre de vider le contenu de la benne derrière le véhicule, le dispositif de manutention comporte en outre un système d'accrochage avec un ou deux crochet(s) disposé(s) en arrière et à peu près au niveau où repose la benne lorsqu'elle est chargée sur le véhicule. Dans la position effacée, chaque crochet est abaissé de sorte qu'il est en dehors du trajet de la benne lorsque celle-ci est chargée ou déchargée, tandis qu'en position d'accrochage chaque crochet est relevé et disposé dans le trajet de l'axe de basculement qui lui correspond. Si les bras, accrochés par les chaînes à une benne chargée sur le véhicule, sont alors basculés en arrière, la benne décrit le même mouvement que précédemment jusqu'à ce que le ou les axe(s) de basculement situé(s) sur la partie basse de la face transversale arrière de la benne s'engage(nt) dans le(s) crochet(s), la benne ne restant alors plus horizontale mais basculant autour du ou des axe(s) de sorte qu'elle se vide derrière le véhicule. Au retour, lorsqu'on fait basculer les bras en avant, le mouvement est similaire, c'est-à-dire que la benne pivote autour de l'(des) axe(s) de préhension jusqu'à ce que celui-ci (ceux-ci) se dégage(nt) du (des) crochet(s), la fin du mouvement étant similaire au chargement (voir normes allemande DIN 30720 et française NF R 17-106).

Il arrive toutefois dans certaines circonstances que la benne ne se dégage pas du ou des deux crochet(s), par exemple du fait de la disparition du déséquilibre de remplissage qui avait permis à la benne de s'accrocher alors qu'elle est plus longue que les bennes pour lesquelles le dispositif d'accrochage a été réglé.

La benne tire alors fortement vers l'avant sur le ou les crochet(s) et les efforts sont tels que le système d'accrochage subit généralement des dégradations.

Dans d'autres circonstances, il arrive que la benne se décroche, mais qu'après décrochage le crochet soit heurté par une partie en saillie sur le plan incliné transversal de la benne, par exemple un encadrement de porte. Le crochet est alors sollicité de façon similaire, et le système d'accrochage est susceptible de subir des dégradations semblables.

L'invention vise à éviter ces dégradations.

Elle propose à cet effet un système d'accrochage pour dispositif de manutention de bennes trapézoïdales, comportant :
- au moins un crochet adapté à coopérer avec un axe de basculement d'une dite benne ;
- des moyens de montage du crochet lui permettant de passer d'une position d'accrochage où il est relevé à une position effacée où il est abaissé, en tournant dans un sens d'abaissement, et inversement dans un sens de relevage ; comportant une butée de relevage associée au crochet pour arrêter le relevage de celui-ci quand le crochet est parvenu en position d'accrochage, la butée de relevage étant alors en appui sur un élément du dispositif de manutention ; et
- des moyens pour s'opposer à l'abaissement du crochet quand il est en position d'accrochage ;
   caractérisé en ce que lesdits moyens de montage comportent en outre :
- des moyens pour permettre au crochet de basculer dans ledit sens de relevage alors que ladite butée de relevage est en appui sur ledit élément du dispositif de manutention ;
- une deuxième butée solidaire de la butée de relevage et disposée de sorte que le crochet est en position d'accrochage quand il est en appui sur la deuxième butée alors que la butée de relevage est en appui sur ledit élément du dispositif de manutention ; et
- un moyen élastique sollicitant le crochet vers la deuxième butée dans ledit sens d'abaissement quand le crochet est dans ladite position d'accrochage.

Par conséquent, quand la butée de relevage est en appui sur l'élément du dispositif de manutention, le crochet prend spontanément la position d'accrochage, et au cas où ce dernier est alors sollicité vers l'avant, il peut basculer dans cette direction en tournant dans le sens de relevage, à l'encontre du moyen élastique.

En évitant ainsi le blocage du crochet vers l'avant qui existait dans les systèmes antérieurs où la butée de relevage est solidaire du crochet, on évite que par effet de levier la butée de relevage soit soumise à des efforts considérablement plus grands que l'effort exercé au bout du crochet, même si la butée de relevage reste par commodité proche de l'axe de rotation du crochet.

L'invention offre par conséquent tous les avantages que l'on peut retirer de la suppression de l'exercice de contraintes considérables sur la butée de relevage en cas de sollicitation accidentelle du crochet vers l'avant, et notamment l'avantage de minimiser les risques de dégradations du système dans un tel cas.

Selon des caractéristiques préférées de l'invention, le crochet et lesdits moyens de montage sont adaptés à permettre au crochet de basculer dans ledit sens de relevage à partir de la position d'accrochage, en étant entraîné par une benne dont l'axe de basculement ne s'est pas dégagé du crochet à la fin d'une manoeuvre de retour de basculement, jusqu'à ce que cette benne repose sur un support de chargement du dispositif de manutention.

On évite ainsi jusqu'au bout tout blocage du crochet susceptible de créer par effet de levier des efforts importants dans le système.

Dans un mode de réalisation préféré de l'invention, qui offre l'avantage d'être simple et commode à mettre en oeuvre, lesdits moyens de montage du crochet comportent un arbre monté à pivotement sur le dispositif de manutention, le crochet étant lui-même monté à pivotement sur l'arbre tandis que la butée de relevage et la deuxième butée sont solidarisées à l'arbre, ledit moyen élastique étant connecté à l'arbre à une première extrémité et au crochet à une deuxième extrémité.

Selon des caractéristiques préférées de ce mode de réalisation, le crochet comporte un flasque monté à pivotement sur ledit arbre et une patte à bout recourbé montée à pivotement sur le flasque, des moyens de butée étant prévus pour que la patte soit mobile par rapport au flasque entre une première position extrême où le bec formé par le bout recourbé est dégagé du flasque et une deuxième position extrême où le flasque ferme ledit bec ; en ce que ledit moyen élastique est un ressort de traction accroché à l'arbre à une extrémité et à la patte à une deuxième extrémité ; et en ce que ledit arbre, ladite deuxième butée, ledit flasque, ladite patte et ledit ressort sont adaptés à coopérer, lorsque la première butée est en appui sur ledit élément du dispositif de manutention, pour que le crochet adopte spontanément une configuration d'accrochage où il est dans ladite première position extrême avec le flasque en appui sur ladite deuxième butée, pour que si le crochet est sollicité dans ledit sens de relevage, alors le flasque et la patte basculent à l'encontre du ressort dans le sens de relevage, et pour que si ladite patte est sollicitée à partir de la configuration d'accrochage dans ledit sens d'abaissement, alors la patte pivote par rapport au flasque dans ledit sens d'abaissement, jusqu'à ladite deuxième position extrême, de sorte que quand le crochet retient une benne en cours de basculement, son bec est fermé par le flasque.

On dispose ainsi d'un crochet qui, en outre de permettre la minimisation des risques de dégradation du système, offre un blocage de sécurité à la benne tout en ayant une structure simple et commode à fabriquer.

De préférence, l'axe de pivotement du flasque sur ledit arbre, l'axe de pivotement de la patte à bout recourbé sur le flasque et l'axe géométrique de l'axe de basculement sont sensiblement coplanaires dans ladite deuxième position extrême.

Cette deuxième position extrême correspond de la sorte à la position que prendrait spontanément le crochet lorsqu'on tire le long de celui-ci, comme le fait essentiellement la benne lorsqu'elle est retenue par le crochet. On évite ainsi que les moyens de butée permettant d'obtenir la deuxième position extrême ne supportent des efforts importants lorsque le crochet retient la benne.

De préférence, pour des raisons de résistance et d'équilibre, ledit flasque est double, avec une joue de chaque côté de ladite patte.

Selon d'autres caractéristiques préférées de ce mode de réalisation, ladite butée de relevage et ladite deuxième butée sont réunies sur un élément commun solidarisé audit arbre.

L'exposé de l'invention sera maintenant poursuivi par la description d'exemples de réalisation, donnée ci-après à titre illustratif et non limitatif, en référence aux dessins annexés. Sur ceux-ci :
- la figure 1 est une perspective partielle simplifiée d'un système conforme à l'invention, prise depuis l'arrière et la gauche d'un véhicule équipé d'un dispositif de manutention de bennes trapézoïdales, le système d'accrochage illustré comportant un crochet central et étant montré en position d'accrochage ;
- la figure 2 est une perspective partielle schématique de ce système dans la même position, prise depuis le côté droit du véhicule et en avant de la partie du système représenté ;
- la figure 3 est une vue de droite en coupe, correspondant à la figure 2 ;
- la figure 4 est une perspective similaire à la figure 2 mais montrant le crochet dans la position de verrouillage d'un axe de basculement de benne qu'il adopte après que la patte à bout recourbé ait été entraînée vers l'arrière par cet axe de basculement ;
- la figure 5 est une vue similaire à la figure 3, mais montrant le système en cours de basculement de la benne ;
- la figure 6 est une vue similaire à la figure 3, mais montrant le crochet dans une position basculée sur l'avant qu'il a adoptée après avoir été entraîné lors du retour de basculement au delà de la position d'accrochage par la benne qui ne s'est pas décrochée ;
- la figure 7 est une vue similaire à la figure 3, mais montrant le système avec le crochet en position effacée ;
- la figure 8 est une vue de derrière partielle du système, correspondant aux figures 2, 3 ou 4, la patte à bout recourbé du crochet et le ressort n'étant pas représentés ;
- la figure 9 est une vue similaire à la figure 8, dans une variante à deux crochets latéraux plutôt qu'un crochet central ; et
- la figure 10 est une vue similaire à la figure 9, dans une variante à trois crochets avec les deux crochets latéraux goupillés et le crochet central dégoupillé.

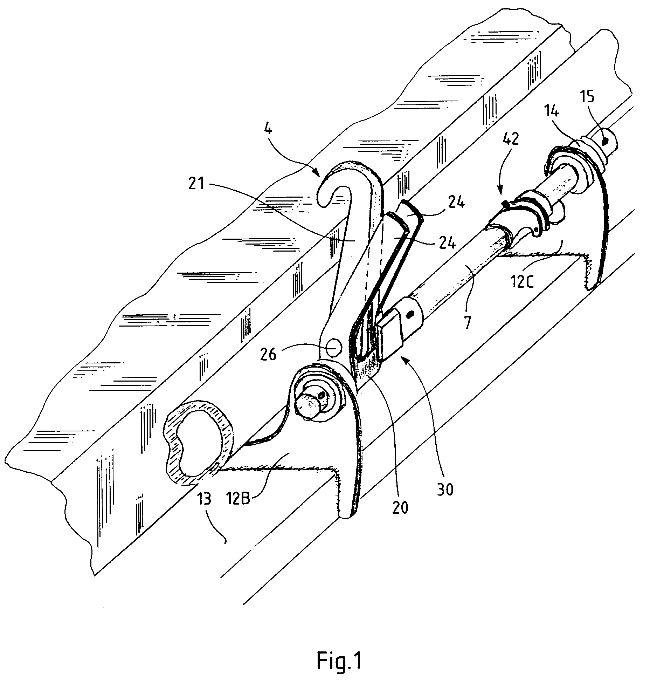

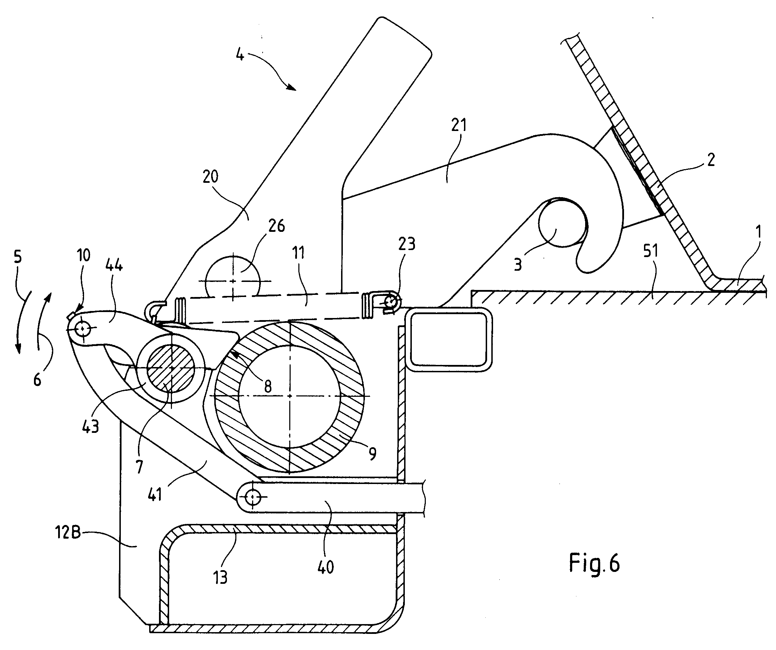

Le système d'accrochage illustré sur les figures 1 à 8 est prévu pour coopérer comme indiqué précédemment avec des bennes trapézoïdales 1 dont la partie basse du pan incliné transversal 2 comporte un axe central de basculement 3 disposé horizontalement et parallèlement au pan incliné (voir figure 6).

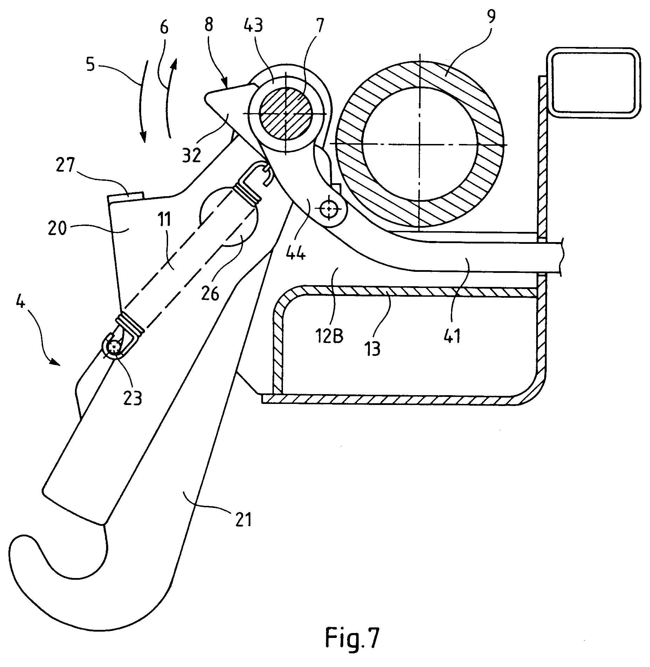

Ce système comporte un crochet central 4 adapté à coopérer avec l'axe 3 ; des moyens de montage du crochet 4 lui permettant de passer d'une position d'accrochage où il est relevé (voir figures 1 à 3) à une position effacée où il est abaissé (voir figure 7) en tournant dans un sens d'abaissement illustré par la flèche 5, et de la position effacée à la position d'accrochage en tournant dans le sens de relevage illustré par la flèche 6 ; ainsi que des moyens pour s'opposer à l'abaissement du crochet 4 quand il est en position d'accrochage.

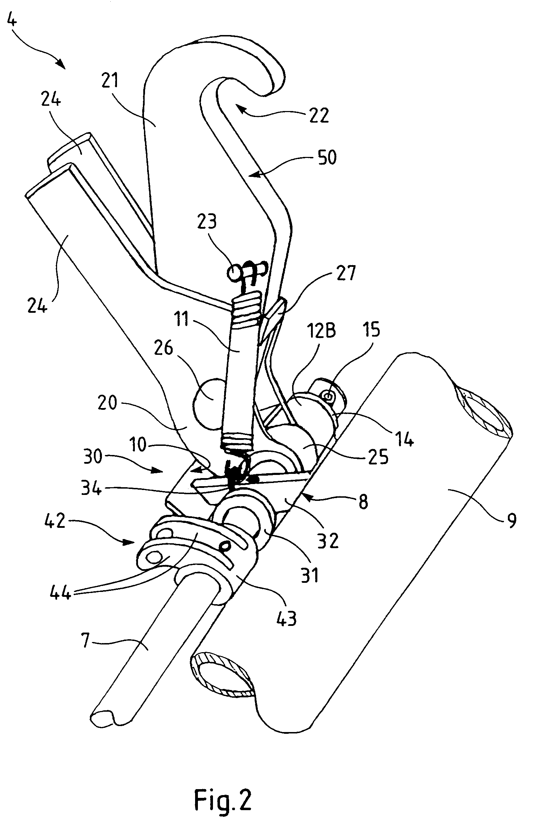

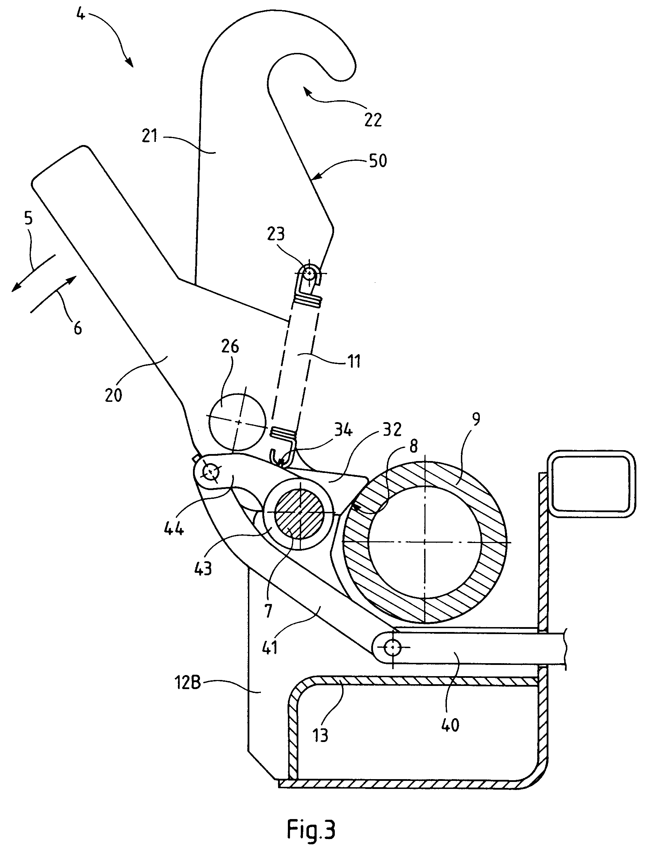

Les moyens de montage du crochet 4 comportent un arbre 7 monté à pivotement sur le dispositif de manutention, le crochet étant lui-même monté à pivotement sur l'abre 7 ; une butée de relevage 8 solidarisée à l'arbre 7 pour arrêter le relevage du crochet quand il est parvenu en position d'accrochage, la butée 8 étant alors en appui sur la poutre arrière transversale ronde 9 du dispositif de manutention (voir figures 2 et 3) ; une deuxième butée 10 solidaire de la butée 8 (et donc de l'arbre 7) et disposée de sorte que le crochet est en position d'accrochage quand il est en appui sur la butée 10 alors que la butée 8 est en appui sur la poutre 9 ; et un ressort de traction 11 connecté à l'arbre 7 à une première extrémité et au crochet 4 à une deuxième extrémité, qui sollicite le crochet 4 vers la butée 10 dans le sens d'abaissement 5 quand le crochet est dans la position d'accrochage (voir figures 2 et 3).

L'arbre 7 est monté à pivotement sur le dispositif de manutention grâce à trois supports verticaux 12A, 12B et 12C soudés sur la poutre arrière basse 13 à section en L du dispositif de manutention, ces supports formant palier pour l'arbre 7, celui-ci étant bloqué axialement grâce à une rondelle 14 disposée à l'extérieur de chaque support externe 12A et 12C, et à une goupille 15 fixée transversalement dans l'arbre 7 et portant sur le coté externe de la rondelle 14.

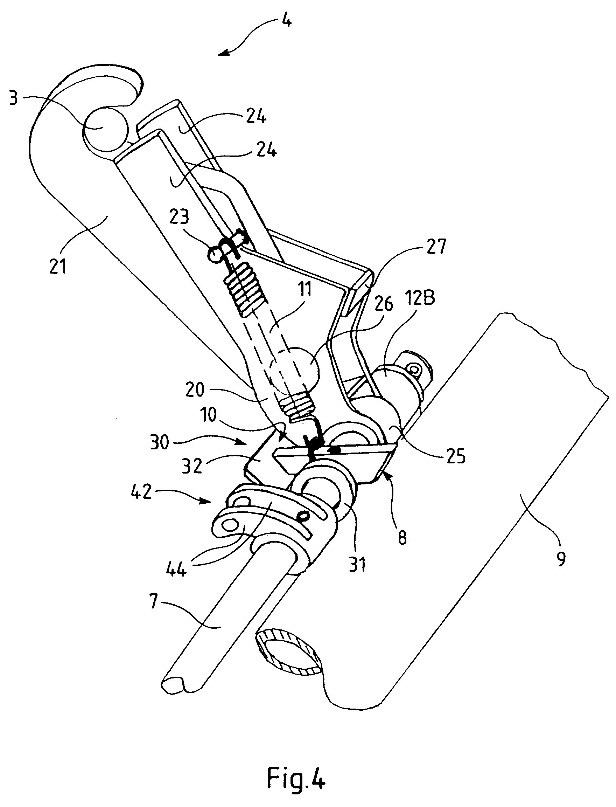

Le crochet 4 comporte un flasque 20 monté à pivotement sur l'abre 7 et une patte 21 à bout recourbé montée à pivotement sur le flasque 20, des moyens de butée étant prévus pour que la patte 21 soit mobile par rapport au flasque 20 entre une première position extrême où le bec 22 formé par le bout recourbé de la patte 21 est dégagé du flasque 20 (voir figures 1 à 3) et une deuxième position extrême où le flasque 20 ferme le bec 22 (voir figure 4).

Le ressort 11 est fixé au crochet 4 par la patte 21, grâce à une tige en saillie 23 soudée transversalement sur la patte 21.

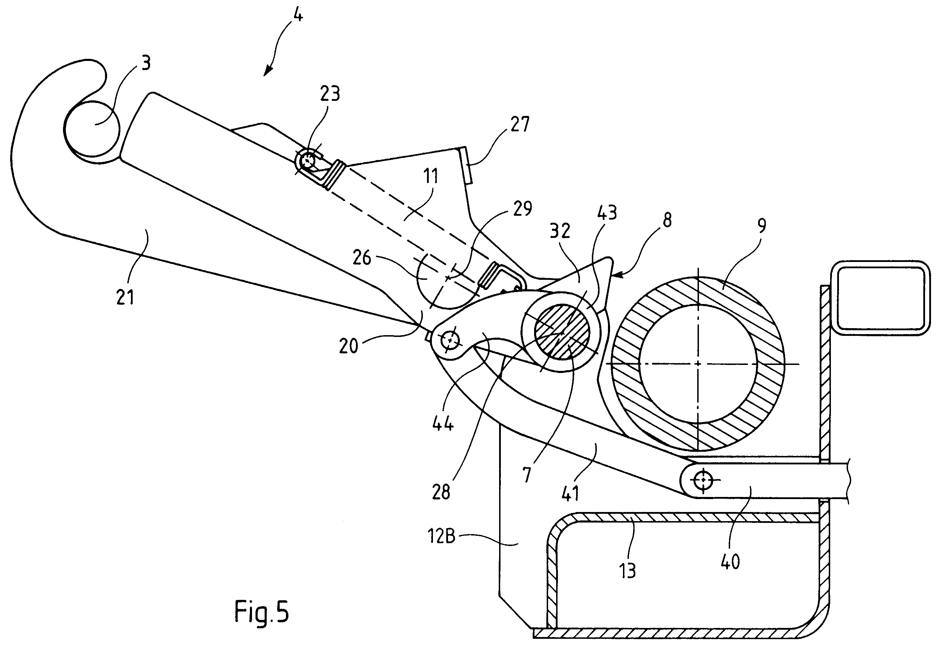

Les différents éléments, et notamment l'arbre 7, la butée 10, le flasque 20, la patte 21 et le ressort 11 sont adaptés à coopérer, lorsque la butée 8 est en appui sur la poutre 9, pour que le crochet adopte spontanément la configuration d'accrochage illustrée sur les figures 1 à 3, où le crochet est dans la première position extrême avec le flasque en appui sur la butée 10 ; pour que si le crochet est sollicité dans le sens de relevage 6, alors le flasque 20 et la patte 21 basculent à l'encontre du ressort 11 dans le sens 6 (voir figure 6) ; et pour que si la patte 21 est sollicitée à partir de la configuration d'accrochage dans le sens d'abaissement 5, alors la patte 21 pivote par rapport au flasque 20 dans le sens 5, jusqu'à la deuxième position extrême (voir figure 4), de sorte que quand le crochet 4 retient une benne en cours de basculement, son bec est fermé par le flasque 20 (voir figure 5).

Le flasque 20 est double et comporte une joue 24 de chaque côté de la patte 21, chaque joue se raccordant à une bague 25 entourant l'arbre 7, la patte 21 étant articulée sur un tourillon 26 fixé sur les joues 24. Un pontet 27 relie les joues 24 et fait partie des moyens de butée propres au crochet, celui-ci étant dans la première position extrême quand la patte 21 est en appui sur le pontet 27. La tige 23 fait également partie des moyens de butée propres au crochet 4, celui-ci étant dans la deuxième position extrême quand la tige 23 est en appui sur une joue 24 (voir figures 4 et 5).

On notera que l'axe 28 de l'arbre 7, qui est également l'axe de pivotement du flasque sur l'arbre 7, que l'axe 29 du tourillon 26, qui est l'axe de pivotement de la patte 21 sur le flasque 20, et que l'axe géométrique de l'axe de basculement 3 sont sensiblement coplanaires dans la deuxième position extrême (voir figures 4 et 5).

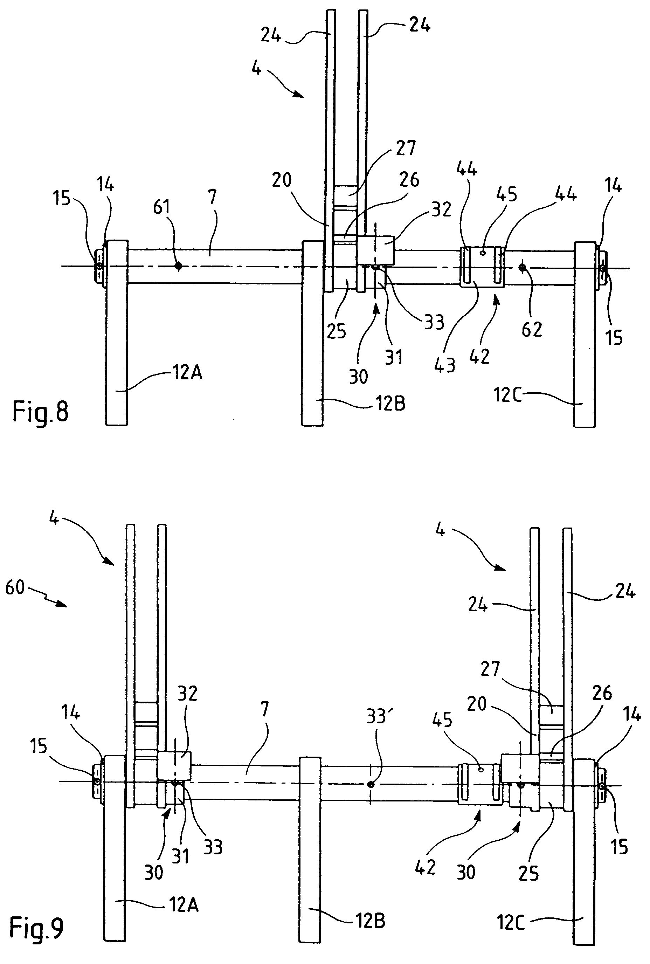

La butée de relevage 8 et la deuxième butée 10 sont réunies sur un élément commun 30 qui comporte une bague 31 entourant l'arbre 7 et un membre 32 en forme de T dont la base correspond à la butée 8 et le dessous d'un des côtés de la branche horizontale à la deuxième butée 10. La solidarisation de l'élément commun 30 à l'arbre 7 est obtenue grâce à une goupille transversale 33 (voir figure 8) qui passe dans un trou approprié 33' de l'arbre 7 (voir figure 9).

Le crochet 4 est bloqué en translation d'un côté par le support 12B et de l'autre côté par l'élément commun 30, et c'est par un petit arceau 34 fixé sur l'élément 30 que le ressort 11 est connecté à l'arbre 7.

Les moyens pour s'opposer à l'abaissement du crochet quand il est en position d'accrochage, comportent un vérin de commande dont la tige 40 est reliée à l'arbre 7 grâce à une biellette 41 articulée sur la tige 40 et sur un levier 42 solidarisé à l'arbre, qui comporte une bague 43 entourant l'arbre 7 et deux joues 44 entre lesquelles s'articule la biellette 41. Le levier 42 est solidarisé à l'arbre 7 grâce à une goupille 45 qui passe dans un trou approprié de l'arbre 7 (voir figure 8).

Lorsque le vérin de commande sort sa tige 40, alors il fait pivoter l'arbre 7 et le crochet 4 dans le sens 6, le relevage s'arrêtant quand la butée 8 vient en appui sur la poutre 9. Le vérin tend alors à garder sa position tige sortie, c'est-à-dire qu'il s'oppose à l'abaissement du crochet.

Pour utiliser le système d'accrochage illustré sur les figures 1 à 8, on part généralement de la position effacée montrée sur la figure 7, où le crochet est abaissé.

On fait alors sortir la tige du vérin de commande, ce qui amène le système à la position d'accrochage montrée sur les figures 1 à 3. Le système est ainsi prêt à intercepter, par le crochet 4, l'axe de basculement 3 de la benne 1 lorsqu'on fera basculer en arrière les bras du dispositif de manutention : l'axe 3 va rencontrer la rampe 50 de la patte 21 et va glisser sur celle-ci jusqu'à venir en appui au fond du bec 22, la patte 21 est alors sollicitée dans le sens d'abaissement 5, ce qui la fait passer à la deuxième position extrême (figure 4) où l'axe 3 est verrouillé dans le crochet 4 grâce au flasque 20 qui ferme le bec 22, le crochet 4 retient alors la benne, celle-ci tire donc fortement sur le crochet en le sollicitant dans le sens d'abaissement 5, le vérin de commande s'oppose élastiquement à cet abaissement, c'est-à-dire sans interdire totalement une certaine rotation du crochet dans ce sens (voir figure 5) : ce vérin est un vérin à air comprimé, dans lequel la tige rentre sous l'effet des sollicitations en comprimant l'air contenu dans la chambre à grande section.

En autorisant cette rotation, on permet que le crochet s'oriente suivant la direction des efforts exercés sur le crochet par la benne, de sorte que le crochet subit essentiellement des efforts de traction. On notera d'ailleurs que le fait d'avoir les axes 28, 29 et l'axe géométrique de l'axe 3 sensiblement coplanaires a pour effet que la tige 23 ne subit pratiquement aucun effort.

Lorsque la benne 1 s'est vidée derrière le véhicule, on fait basculer les bras du dispositif de manutention vers l'avant, et on suit en principe la séquence inverse, c'est-à-dire que le système accompagne la benne jusqu'à être en position d'accrochage (figures 1 à 3), l'axe 3 de la benne 1 se dégageant alors du crochet 4.

La figure 6 montre un cas où l'axe 3 ne s'est pas dégagé, de sorte que la benne a tiré vers l'avant sur le crochet 4, et a fait basculer celui-ci dans le sens du relevage 6 à l'encontre du ressort 11. On notera que le crochet a pu basculer jusqu'à ce que la benne repose sur un support de chargement 51 du dispositif de manutention.

Si l'on dégage alors le crochet de l'axe 3, il reprendra spontanément la position d'accrochage.

Pour ramener le crochet à la position effacée, on agit sur le vérin de commande, dont on fait rentrer la tige 40.

Dans la variante illustrée sur la figure 9, le système d'accrochage 60 est prévu pour coopérer avec des bennes qui ont deux axes de basculement latéraux plutôt qu'un axe central.

Le système 60 est similaire au système illustré sur les figures 1 à 8, mais avec deux crochets latéraux au lieu d'un crochet central. On a gardé les mêmes références numériques, les éléments utilisés étant identiques : le crochet 4 de gauche est bloqué axialement entre le support 12A et l'élément commun 30 goupillé dans le trou 61 (voir figure 8), et le crochet 4 de droite est bloqué axialement entre le support 12C et l'élément commun 30 goupillé dans le trou 62.

A ce propos, on notera l'intérêt du membre en forme de T de l'élément commun 30, qui permet de fournir la deuxième butée 10 à la fois quand il est disposé à droite et quand il est disposé à gauche du crochet 4.

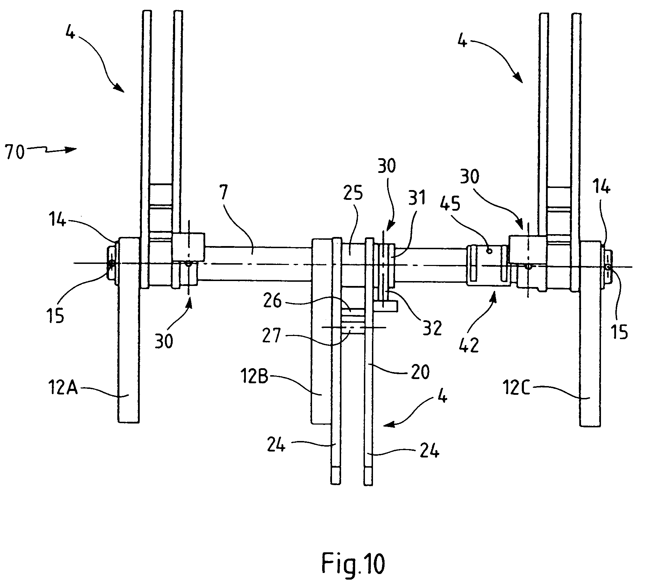

Dans la variante illustrée sur la figure 10, le système d'accrochage 70 est prévu pour coopérer soit avec des bennes qui ont un axe de basculement central, soit avec des bennes qui ont deux axes de basculement latéraux.

Le système 70 est similaire au système illustré sur les figures 1 à 8, ou sur la figure 9, mais avec un crochet central monté comme sur les figures 1 à 8 et deux crochets latéraux montés comme sur la figure 9.

Lorsque le système 70 doit être utilisé avec des bennes à deux axes de basculement latéraux, on enlève la goupille 33 qui solidarise l'élément commun 30 associé au crochet central de sorte que ce crochet restera en position effacée quand on fera sortir la tige du vérin de commande (configuration illustrée sur la figure 10).

Lorsque le système doit être utilisé avec des bennes à un axe de basculement central, ce sont les goupilles des éléments communs des crochets externes qu'on enlève.

On notera que les dernières caractéristiques qui viennent d'être décrites font l'objet d'une demande de brevet déposée en même temps que la présente demande.

Dans des variantes simplifiées, destinées à des applications où il n'est pas utile que le crochet verrouille l'axe de basculement de la benne, on remplace le crochet 4 par une patte à bout recourbé articulée directement sur l'arbre 7 et rentrant directement en contact avec la butée 10.

## Revendications

1. Système d'accrochage pour dispositif de manutention de bennes trapézoïdales, comportant :
- au moins un crochet (4) adapté à coopérer avec un axe de basculement (3) d'une dite benne (1) ;
- des moyens de montage (12A, 12B, 12C, 7) du crochet lui permettant de passer d'une position d'accrochage où il est relevé à une position effacée où il est abaissé, en tournant dans un sens d'abaissement (5), et inversement dans un sens de relevage (6) ; comportant une butée de relevage (8) associée au crochet (4) pour arrêter le relevage de celui-ci quand le crochet est parvenu en position d'accrochage, la butée de relevage étant alors en appui sur un élément (9) du dispositif de manutention ; et
- des moyens (40, 41, 42) pour s'opposer à l'abaissement du crochet quand il est en position d'accrochage ;
caractérisé en ce que lesdits moyens de montage comportent en outre :
- des moyens pour permettre au crochet de basculer dans ledit sens de relevage alors que ladite butée de relevage (8) est en appui sur ledit élément (9) du dispositif de manutention ;
- une deuxième butée (10) solidaire de la butée de relevage (8) et disposée de sorte que le crochet est en position d'accrochage quand il est en appui sur la deuxième butée (10) alors que la butée de relevage est en appui sur ledit élément (9) du dispositif de manutention ; et
- un moyen élastique (11) sollicitant le crochet (4) vers la deuxième butée (10) dans ledit sens d'abaissement (5) quand le crochet est dans ladite position d'accrochage.

2. Système selon la revendication 1, caractérisé en ce que le crochet (4) et lesdits moyens de montage sont adaptés à permettre au crochet de basculer dans ledit sens de relevage (6) à partir de la position d'accrochage, en étant entraîné par une benne (1) dont l'axe de basculement (3) ne s'est pas dégagé du crochet (4) à la fin d'une manoeuvre de retour de basculement, jusqu'à ce que cette benne repose sur un support de chargement (51) du dispositif de manutention.

3. Système selon l'une quelconque des revendications 1 ou 2, caractérisé en ce que lesdits moyens de montage du crochet (4) comportent un arbre (7) monté à pivotement sur le dispositif de manutention, le crochet (4) étant lui-même monté à pivotement sur l'arbre (7) tandis que la butée de relevage (8) et la deuxième butée (10) sont solidarisées à l'arbre (7), ledit moyen élastique (11) étant connecté à l'arbre (7) à une première extrémité et au crochet (4) à une deuxième extrémité.

4. Système selon la revendication 3, caractérisé en ce que le crochet (4) comporte un flasque (20) monté à pivotement sur ledit arbre (7) et une patte (21) à bout recourbé montée à pivotement sur le flasque (20), des moyens de butée (23, 27) étant prévus pour que la patte (21) soit mobile par rapport au flasque (20) entre une première position extrême où le bec (22) formé par le bout recourbé est dégagé du flasque (20) et une deuxième position extrême où le flasque (20) ferme ledit bec (22) ; en ce que ledit moyen élastique est un ressort de traction (11) accroché à l'arbre (7) à une extrémité et à la patte (21) à une deuxième extrémité ; et en ce que ledit arbre (7), ladite deuxième butée (10), ledit flasque (20), ladite patte (21) et ledit ressort (11) sont adaptés à coopérer, lorsque la première butée (8) est en appui sur ledit élément (9) du dispositif de manutention, pour que le crochet (4) adopte spontanément une configuration d'accrochage où il est dans ladite première position extrême avec le flasque en appui sur ladite deuxième butée (10), pour que si le crochet est sollicité dans ledit sens de relevage, alors le flasque (20) et la patte (21) basculent à l'encontre du ressort (11) dans le sens de relevage (6), et pour que si ladite patte (21) est sollicitée à partir de la configuration d'accrochage dans ledit sens d'abaissement (5), alors la patte (21) pivote par rapport au flasque (20) dans ledit sens d'abaissement (5), jusqu'à ladite deuxième position extrême, de sorte que quand le crochet (4) retient une benne (1) en cours de basculement, son bec (22) est fermé par le flasque (20).

5. Système selon la revendication 4, caractérisé en ce que l'axe (28) de pivotement du flasque sur ledit arbre, l'axe (29) de pivotement de la patte à bout recourbé (21) sur le flasque (20) et l'axe géométrique de l'axe de basculement (3) sont sensiblement coplanaires dans ladite deuxième position extrême.

6. Système selon l'une quelconque des revendications 4 ou 5, caractérisé en ce que ledit flasque (20) est double, avec une joue (24) de chaque côté de ladite patte (21).

7. Système selon la revendication 6, caractérisé en ce que lesdits moyens de butée prévus entre le flasque (20) et la patte (21) comportent un pontet (27) reliant lesdites joues (24).

8. Système selon l'une quelconque des revendications 4 à 7, caractérisé en ce que lesdits moyens de butée prévus entre le flasque (20) et la patte (21) comportent une tige (23) à laquelle est accroché ledit ressort (11).

9. Système selon l'une quelconque des revendications 3 à 8, caractérisé en ce que ladite butée de relevage (8) et ladite deuxième butée (10) sont réunies sur un élément commun (30) solidarisé audit arbre (7).

10. Système selon la revendication 9, caractérisé en ce que ledit élément commun (30) comporte une bague (31) entourant ledit arbre (7) et un membre en forme de T dont la base correspond à ladite butée de relevage (8) et le dessous d'un des côtés de la branche horizontale à ladite deuxième butée (10).

11. Système selon l'une quelconque des revendications 9 ou 10, caractérisé en ce que le crochet comporte une bague (25) entourant ledit arbre (7), et est immobilisé en translation d'un côté par un support (12B) de montage à rotation de l'arbre, et de l'autre côté par ledit élément commun (30).

12. Système selon l'une quelconque des revendications 3 à 11, caractérisé en ce que lesdits moyens pour s'opposer à l'abaissement du crochet quand il est en position d'accrochage, comportent un vérin de commande et des moyens de liaison de la tige (40) de ce vérin audit arbre (7), ledit vérin admettant une position où le crochet est en position d'accrochage et où il s'oppose à l'abaissement du crochet, et en outre une position où le crochet est en position effacée.

## Claims

1. Attachment system for a device for handling trapezoidal grabs, including:
- at least one hook (4) adapted to cooperate with a pivot shaft (3) on a said grab (1);
- means (12A, 12B, 12C, 7) for mounting the hook, enabling it to move from an attachment position in which it is raised to a retracted position in which it is lowered, by rotating in a lowering direction (5), and conversely in a raising direction (6); including a raising stop (8) associated with the hook (4) in order to stop the raising thereof when the hook has reached the attachment position, the raising stop then being in abutment on a member (9) on the handling device; and
- means (40, 41, 42) for resisting the lowering of the hook when it is in the attachment position;
characterised in that the said mounting means also include:
- means for enabling the hook to pivot in the said raising direction when the said raising stop (8) is in abutment on the said member (9) on the handling device;
- a second stop (10) fixed to the raising stop (8) and disposed so that the hook is in the attachment position when it is in abutment on the second stop (10) whilst the raising stop is in abutment on the said member (9) on the handling device; and
- an elastic means (11) pulling the hook (4) towards the second stop (10) in the said lowering direction (5) when the hook is in the said attachment position.

2. System according to Claim 1, characterised in that the hook (4) and the said mounting means are adapted to enable the hook to pivot in the said raising direction (6) from the attachment position, whilst being drawn by a grab (1) whose pivot shaft (3) is not disengaged from the hook (4) at the end of a pivoting return manoeuvre, until this grab rests on a loading support (51) of the handling device.

3. System according to either one of Claims 1 or 2, characterised in that the said mounting means for the hook (4) include a spindle (7) pivotally mounted on the handling device, the hook (4) itself being pivotally mounted on the spindle (7) whilst the raising stop (8) and the second stop (10) are fixed to the spindle (7), the said elastic means (11) being connected to the spindle (7) at a first end and to the hook (4) at a second end.

4. System according to Claim 3, characterised in that the hook (4) has a cheek plate (20) pivotally mounted on the said spindle (7) and a crook (21) with a curved end pivotally mounted on the cheek plate (20), stop means (23, 27) being provided so that the crook (21) is movable with respect to the cheek plate (20) between a first extreme position in which the beak (22) formed by the curved end is disengaged from the cheek plate (20) and a second extreme position in which the cheek plate (20) closes the said beak (22); in that the said elastic means is a traction spring (11) attached to the spindle (7) at one end and to the crook (22) at a second end; and in that the said spindle (7), the said second stop (10), the said cheek plate (20), the said crook (21) and the said spring (11) are adapted to cooperate, when the first stop (8) is in abutment on the said member (9) of the handling device, so that the hook (4) spontaneously adopts an attachment configuration in which it is in the said first extreme position with the cheek plate in abutment on the said second stop (10), so that, if the hook is forced in the said raising direction, then the cheek plate (20) and crook (21) pivot counter to the spring (11) in the raising direction (6), and so that, if the said crook (21) is forced from the attachment configuration in the said lowering direction (5), then the crook (21) pivots with respect to the cheek plate (20) in the said lowering direction (5), and as far as the said second extreme position, so that, when the crook (4) holds a grab (1) during pivoting, its beak (22) is closed by the cheek plate (20).

5. System according to Claim 4, characterised in that the axis (28) of pivoting of the cheek plate on the said spindle, the axis (29) of pivoting of the crook with a curved end (21) on the cheek plate (20) and the geometric axis of the pivot shaft (3) are substantially coplanar in the said second extreme position.

6. System according to either one of Claims 4 or 5, characterised in that the said cheek plate (20) is dual, with a cheek (24) on each side of the said crook (21).

7. System according to Claim 6, characterised in that the said stop means provided between the cheek plate (20) and the crook (21) have a bridge (27) connecting the said cheek plates (24).

8. System according to any one of Claims 4 to 7, characterised in that the said stop means provided between the cheek plate (20) and the crook (21) have a rod (23) to which the said spring (11) is attached.

9. System according to any one of Claims 3 to 8, characterised in that the said raising stop (8) and the said second stop (10) are connected to a common element (30) fixed to the said spindle (7).

10. System according to Claim 9, characterised in that the said common element (30) has a ring (31) surrounding the said spindle (7) and a T-shaped member whose base corresponds to the said raising stop (8) and the underside of one of the sides of the horizontal arm to the said second stop (10).

11. System according to either one of Claims 9 or 10, characterised in that the hook has a ring (25) surrounding the said spindle (7), and is immobilised with respect to translation on the one hand by a support (12B) for rotatably mounting the spindle, and on the other hand by the said common element (30).

12. System according to any one of Claims 3 to 11, characterised in that the said means for resisting the lowering of the hook when it is in the attachment position include a control ram and means for connecting the stem (40) of this ram to the said spindle (7), the said ram affording a position where the hook is in the attachment position and where it resists the lowering of the hook, and also a position where the hook is in the retracted position.

## Patentansprüche

1. Einhaksystem für eine Vorrichtung zum Handhaben trapezförmiger Behälter mit
- wenigstens einem mit einer Schwenkachse (3) des Behälters (1) zusammenwirkenden Haken (4);
- Tragmitteln (12A, 12B, 12C, 7) des Hakens, die seine Bewegung aus einer Einhakstellung, in der er aufrecht steht, in eine unwirksame, abgesenkte Stellung durch Drehen in Absenkrichtung (5) sowie eine umgekehrte Drehung in Aufstellrichtung (6) zulassen und einen dem Haken (4) zugeordneten, seine Aufstellbewegung bei Erreichen der Einhakstellung anhaltenden Aufstellanschlag (8) aufweisen, der dann an einem Teil (9) der Handhabungsvorrichtung anliegt, und
- Haltemitteln (40, 41, 42), die dem Absenken des Hakens Widerstand entgegensetzen, wenn er sich in der Einhakstellung befindet,
**dadurch gekennzeichnet**, daß
- der Haken dann, wenn der Aufstellanschlag (8) an dem Teil (9) der Handhabungsvorrichtung anliegt, weiter in der Richtung der Aufstellbewegung schwenkbar ist,
- ein zweiter, fest mit dem Aufstellanschlag (8) verbundener Anschlag (10) so angeordnet ist, daß der Haken die Einhakstellung einnimmt, wenn er an dem zweiten Anschlag (10) anliegt, wahrend der Aufstellanschlag an dem Teil (9) der Handhabungsvorrichtung anliegt, und
- der Haken (4) in der Einhakstellung durch ein elastisches Glied (11) in Absenkrichtung (5) gegen den zweiten Anschlag (10) andrückbar ist.

2. System nach Anspruch 1, **dadurch gekennzeichnet**, daß der Haken (4) und die Tragmittel so ausgelegt sind, daß er von der Einhakstellung weiter in der Richtung der Aufstellbewegung (6) schwenkbar ist, indem er von einem Behälter (1) mitgenommen wird, dessen Schwenkachse (3) sich am Ende eines Rückschwenkvorgangs nicht vom Haken (4) gelöst hat, bis der Behälter auf einer Ladefläche (51) der Handhabungsvorrichtung ruht.

3. System nach Anspruch 1 oder 2, **dadurch gekennzeichnet**, daß die Tragmittel des Hakens (4) eine drehbar an der Handhabungsvorrichtung gelagerte Welle (7) aufweisen, der Haken (4) selbst schwenkbar auf der Welle (7) gelagert ist, während der Aufstellanschlag (8) und der zweite Anschlag (10) fest an der Welle (7) angebracht sind und das elastische Glied (11) an einem ersten Ende mit der Welle (7) und an einem zweiten Ende mit dem Haken (4) verbunden ist.

4. System nach Anspruch 3, **dadurch gekennzeichnet**, daß der Haken (4) eine schwenkbar auf der Welle (7) gelagerte Wange (20) und eine schwenkbar an dieser gelagerte, am Ende zurückgebogene Klaue (21) aufweist und Anschlagmittel (23, 27) vorgesehen sind, mittels welcher die Klaue (21) relativ zur Wange (20) zwischen einer ersten Endstellung, in der das vom zurückgebogenen Ende gebildete Hakenmaul (22) von der Wange (20) freigegeben ist, und einer zweiten Endstellung, in der die Wange (20) das Hakenmaul (22) verschließt, bewegbar ist, daß das elastische Glied eine mit einem Ende an der Welle (7) und mit dem zweiten Ende an der Klaue (21) eingehängte Zugfeder (11) ist und daR die Welle (7), der zweite Anschlag (10), die Wange (20), die Klaue (21) und die Feder (11) dann, wenn der erste Anschlag (8) an dem Teil (9) der Handhabungsvorrichtung anliegt, derart zusammenwirken, daß der Haken (4) von allein eine Einhakstellung einnimmt, in der er in der ersten Endstellung ist, in welcher die Wange an dem zweiten Anschlag (10) anliegt, daß dann, wenn der Haken in der Richtung der Aufstellbewegung gedrängt wird, die Wange (20) und die Klaue (21) gegen die Kraft der Feder (11) in der Richtung der Aufstellbewegung verschwenken, und daß dann, wenn die Klaue (21) aus der Einhakstellung in Absenkrichtung (5) gedrängt wird, sie relativ zur Wange (20) in Absenkrichtung (5) bis in die zweite Endstellung verschwenkt, so daß dann, wenn der Haken (4) einen Behälter (1) während des Schwenkens hält, sein Hakenmaul (22) von der Wange (20) verschlossen ist.

5. System nach Anspruch 4, **dadurch gekennzeichnet**, daß die Achse (28) der Schwenkbewegung der Wange auf der Welle, die Achse (29) der Schwenkbewegung der Klaue (21) mit zurückgebogenem Ende auf der Wange (20) und die geometrische Achse der Schwenkachse (3) in der zweiten Endstellung im wesentlichen in einer Ebene liegen.

6. System nach einem der Ansprüche 4 oder 5, **dadurch gekennzeichnet**, daß die Wange (20) doppelt vorhanden ist, wobei sich jeweils eine Backe (24) auf jeder Seite der Klaue (21) befindet.

7. System nach Anspruch 6, **dadurch gekennzeichnet**, daß die zwischen der Wange (20) und der Klaue (21) vorgesehenen Anschlagmittel eine die Backen (24) verbindende Traverse (27) aufweisen.

8. System nach einem der Ansprüche 4 bis 7, **dadurch gekennzeichnet**, daß die zwischen der Wange (20) und der Klaue (21) vorgesehenen Anschlagmittel eine Stange (23) aufweisen, an welcher die Feder (11) eingehängt ist.

9. System nach einem der Ansprüche 3 bis 8, **dadurch gekennzeichnet**, daß der Aufstellanschlag (8) und der zweite Anschlag (10) zu einem fest mit der Welle (7) verbundenen gemeinsamen Teil (30) vereinigt sind.

10. System nach Anspruch 9, **dadurch gekennzeichnet**, daß das gemeinsame Teil (30) einen die Welle (7) umgebenden Ring (31) sowie ein T-förmiges Teil aufweist, dessen Basis dem Aufstellanschlag (8) und dessen Unterfläche der einen Seite des horizontalen Gurts dem zweiten Anschlag (10) entspricht.

11. System nach einem der Ansprüche 9 oder 10, **dadurch gekennzeichnet**, daß der Haken einen die Welle (7) umgebenden Ring (25) aufweist und gegen Bewegung in Querrichtung festgelegt ist auf der einen Seite durch ein tragendes Drehlager der Welle und auf der anderen Seite durch das gemeinsame Teil (30).

12. System nach einem der Ansprüche 3 bis 11, **dadurch gekennzeichnet**, daß die Haltemittel, die sich dem Absenkens des Hakens widersetzen, wenn er sich in der Einhakstellung befindet, einen Steuerzylinder und Glieder zum Verbinden der Kolbenstange (40) dieses Zylinders mit der Welle (7) aufweisen, wobei der Zylinder eine Stellung, in der sich der Haken in der Einhakstellung befindet und sich der Zylinder dem Absenken des Hakens widersetzt, und weiterhin eine Stellung zuläßt, in welcher der Haken eine unwirksame Stellung einnimmt.
